# EUROPEAN PATENT SPECIFICATION

(11) **EP 2 202 616 B1**
(45) Date of publication and mention of the grant of the patent: **28.09.2016**
(21) Application number: 10160495.7
(22) Date of filing: 14.05.2001
(51) Int. Cl.: G06F 3/033, G06F 1/16, G01C 21/20, G01C 21/36, G01C 17/00

(54) **A method and apparatus to browse and access downloaded contextual information**
Verfahren und Vorrichtung zum Sichten und Zugreifen nachgeladener kontextabhängiger Informationen
Procédé et appareil pour naviguer et accéder aux informations contextuelles téléchargées

(30) Priority: 16.05.2000 US 572677
(43) Date of publication of application: 30.06.2010
(62) Divisional of application: 01931989.6
(73) Proprietor: Nokia Technologies Oy, 02610 Espoo (FI)
(72) Inventor: Suomela, Riku, FIN-33200, Tampere (FI)
(74) Representative: Swindell & Pearson Limited

(56) References cited:
- WO-A-97/07467
- WO-A-98/55833
- DE-A1- 19 837 568
- GB-A- 2 298 539

## Description

### BACKGROUND OF THE INVENTION

### 1. Field of the Invention

The present invention relates to a device and method for browsing and accessing contextual data in a user device.

### 2. Description of the Related Art

A device and method for presenting information related to objects being addressed is disclosed in PCT references WO 99/42946 and WO 99/42947. According to these references, a system includes a database with geometric descriptions of objects. Based on where the user is and the vector corresponding to where the user is pointing, the system determines the object of interest. For example, if a user is determined to be at a specific location in a city and the user points to a hotel, the vector passes through the geometric description of the hotel in the database. Accordingly, the devices of these references merely determine what space is being addressed and imply that particular objects are being addressed by way of the association of objects to spatial definitions or geometric descriptors in the database.

A problem with these devices is that a user is required to point to a landmark or point of interest and query the system to determine what objects are retrievable in that direction. In other words, the user does not know whether an object is in the database until the user points at the object.

### SUMMARY OF THE INVENTION

It is an object of the present invention to provide a method for accessing data by providing a preview of a collection of virtual objects related to the user's surroundings and allowing easy access to their contents.

According to the present invention a method for browsing and accessing context information with a user equipment comprises determining a location of the user equipment using a location service. After the location is determined, the user equipment can download the context information from a database in a network. The contextual information contains information related to actual objects within a neighborhood surrounding the user equipment. The information about each object includes name, geographical location, and URL from which content can be retrieved. The orientation of the user equipment is determined using a compass in the user equipment. Once the orientation is known, a visual user interface is generated at the user equipment for displaying the contextual information that has been downloaded in a virtual representation of the neighborhood of the user equipment. One such representation is a horizontal strip compass display onto which icons of the objects are displayed at positions corresponding to their actual relative directions. Another representation is a plan view, i.e., bird's eye view, of a map onto which object icons are superimposed. To select one of the virtual objects displayed, the user can point to one of the virtual objects in the visual user. interface by orienting the user equipment. That is, the user manipulates at least a portion of the user equipment until the front of the user equipment faces the object to be selected. The display shows a target area which is an area in front of the user equipment. A virtual object is selected by orienting the user equipment until the virtual object to be selected is within the target area. Once selected, the virtual object can be opened by actuating an activation button. The content of the selected virtual objects may be stored in the user equipment and/or immediately wirelessly downloaded from a database at the server of the wireless system or from an internet web page. retrieved from the URL associated with the one of the virtual objects. The content, or at least a portion thereof, is then visualized on the display of the user equipment.

According to the present invention, the user equipment may comprise a mobile phone, a personal digital assistant, or a wearable computer with a head-mounted display. The user equipment requires a display, an input device, a compass, and a means for wireless communication with the network in which the contextual data is stored.

Furthermore, either the network or the user equipment must have a location detector for determining the location of the user equipment so that the applicable contextual data can be downloaded.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### BRIEF DESCRIPTION OF THE DRAWINGS

In the drawings:
Fig. 1 is a schematic diagram showing the user equipment and network according to the present invention;
Fig. 2 is a signal flow diagram showing the basic method for browsing and accessing contextual data according to the present invention;
Fig. 3a and 3b show a display of a user equipment with contextual data and the user equipment;
Figs. 4a and 4b show the display and user equipment of Figs. 3a and 3b after the user equipment has been reoriented to the right;
Figs. 5a and 5b show the display when more than one virtual object are in a target area of the display;
Fig. 6 shows a display of the user equipment when the user equipment when a map and a linear compass are simultaneously displayed; and
Fig. 7 shows a view from a head mounted display of a user equipment.

### DETAILED DESCRIPTION OF THE PRESENTLY PREFERRED EMBODIMENTS

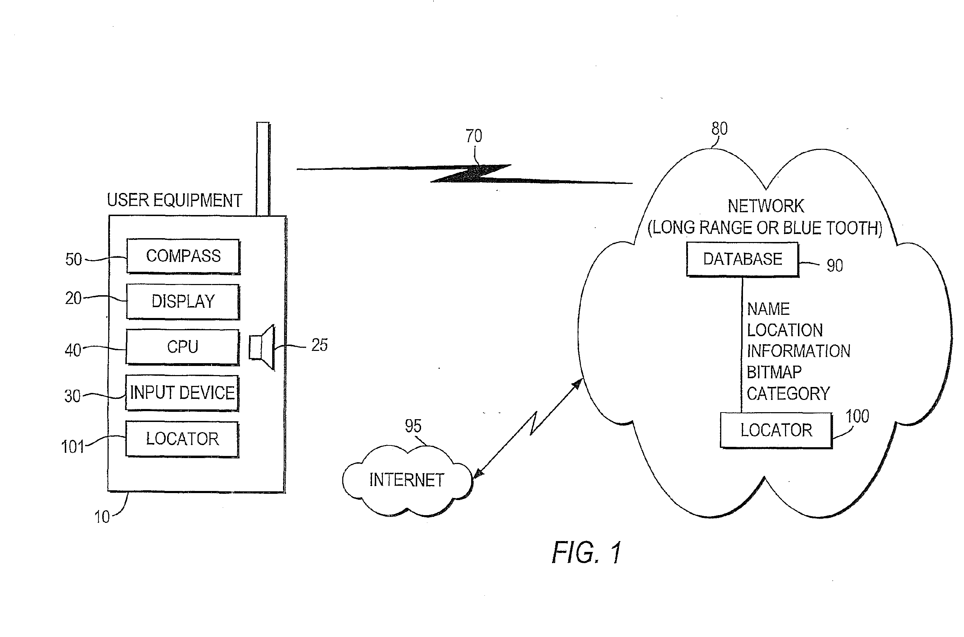

Fig. 1 is a block diagram showing a system in which the present invention is incorporated. A user equipment (UE) 10 comprises a mobile device with a display 20, a speaker 25 for providing audio signals to a user, an input device 30, a CPU 40, and a compass 50 for determining the orientation of the UE 10. The UE 10 is connected via a wireless connection 70 to a network 80 comprising a database 90 and a location service 100 for determining the geographic location of the UE 10.

Although the location service 100 is shown as being in the same network as the database 90, the location service may be a separate network or may be a separate system. For example, the location service 100 may comprise a Global Positioning Satellite (GPS) system in which a locator 101 is arranged in the user equipment 10. In Blue Tooth or other short range system, the locator 100 may be in the network and tell the user its position based on the connection. Furthermore, any locating system which utilizes the Base Transceiver Stations (BTSs) of a mobile communication system such as the Time of Arrival (TOA) positioning method, or the Observed Time Difference (OTD) positioning method (These positioning methods are described in technical specification GSM 03.71, version 7.2.1) may also be used. The location system 100 may comprise a cell ID based positioning method, Angle of Arrival (AOA) (see technical specification 3G TS 25.305, version 3.1.0), or any other method which may be used to determine the location of the UE 10. The network 80 may comprise a long range network such as those used for mobile phones or a short range network such as Blue Tooth. Furthermore, the network 90 may be connected to the internet 95. The UE 10 may comprise any type of mobile computing device such as personal digital assistants (PDAs) or a mobile phone with computing abilities. Furthermore, the UE 10 may comprise a wearable computer wherein the display 20 comprises a head-mounted display which allows the user to see a virtual data while simultaneously viewing the real world.

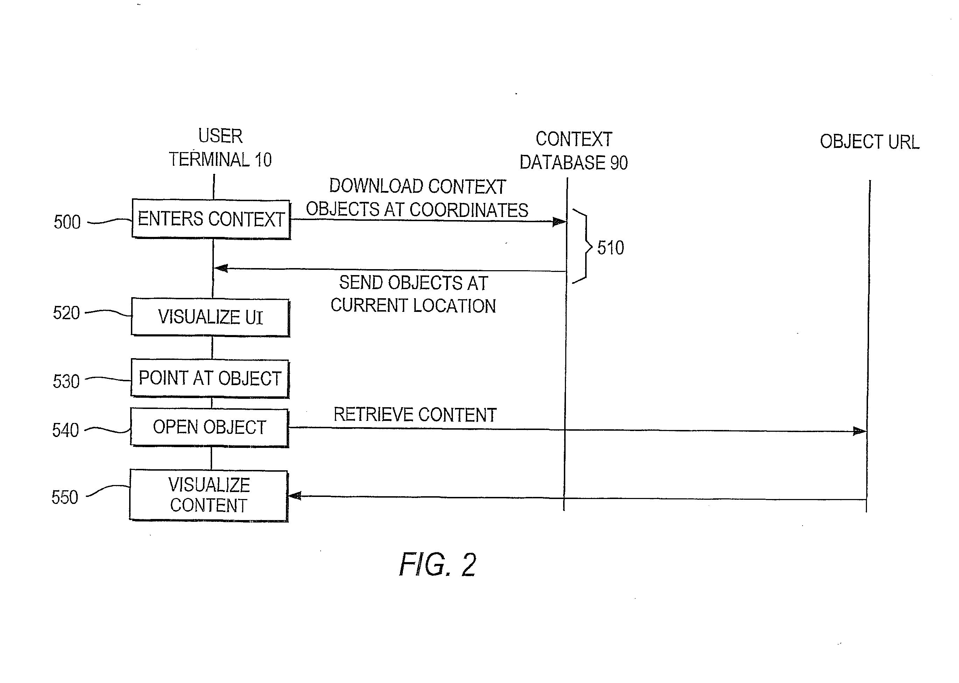

Referring to Fig. 2, the process of browsing and accessing contextual information according to the present invention is as follows: a location service 100 determines the geographic location of the UE, step 500. The coordinates are transmitted to the database 90 or are used in conjunction with the database 90 to download contextual data from the database 90 to the UE 10, step 510. The contextual data is a collection of virtual objects corresponding to real objects within a limited area surrounding the user's actual location. For each virtual object, the database preferably contains a record comprising at least a name of the object, a geographic location of the object in the real world, and information concerning the object. Instead of storing the information concerning the object, the database may instead or in addition include an internet address such as a Uniform Resource Locator (URL) or other remote computer address. The record may also contain a bit map for displaying an icon of the object. Furthermore, the record may also contain a type of object, i.e., a field in which a classification or category of the object is listed.

The downloaded contextual data may comprise all virtual objects in the database 90 within an area surrounding the user's location. The user may also select the size of the area of interest. For example, if the user is in a museum, the objects would include the artwork within the room in which the user is standing. The contextual data may alternatively include only those virtual objects in the database 90 which meet some criteria of the user. For example, the user may be looking for lodging for the night. Accordingly, the contextual data will include hotels, bed and breakfast inns, motels, hostels, and other places in which the user may stay for the night. In another example, the user may be looking for food and the contextual data will include restaurants and diners in the user's current neighborhood. To accomplish this, the records of the contextual data must include information in the classification field or category field.

Instead of static objects, such as buildings, monuments, or other points of interest, the objects may comprise dynamic objects such as the UE of a friend or the location of public transportation such as a bus or train.

When downloading the contextual data, the size of the limited area surrounding the user equipment must be known. The size may comprise a default value or may be based on criteria such as the speed of the movement of the user equipment and/or the density of virtual objects in the area. Furthermore the size may be user selectable via the input device 30. For example, if a user is standing still or moving at a walking pace, the area may comprise a relatively small radius such as 50-1000 meters. However, if the user is travelling faster such as at the speed of a motor vehicle on a highway, the area may comprise a larger radius such as 10 kilometers.

Furthermore, the density of virtual objects is likely to be greater in a city. Therefore, when the user is in a city, the limited area may be smaller than when a user is in a rural or suburban area. There may be a limit as to the capacity of virtual objects the user equipment can hold or display at one time. Accordingly, the limited area may also be adjusted based on the capacity of the user equipment to hold or display the contextual data.

Once the contextual data is downloaded, the compass 50 determines the direction in which the UE 10 is pointing and displays the accessible virtual objects that are within the limited area, step 520. The virtual object directly in front of the user is highlighted or selected and can be accessed by pushing or otherwise actuating an activation button on the input device 30. As the UE 10 changes orientation, different virtual objects move in front of the user. Therefore, to select or point to a virtual object to be accessed the user merely changes the orientation of the UE 10 until the virtual object to be accessed lies in a target space or a selection area in front of the UE 10, i.e., the user aligns the UE 10 with the virtual object to accessed, step 530. The input device 30 may then be actuated to open the selected object, i.e., retrieve the content of the selected object associated with the selected object, step 540. Finally, the content is displayed on the display, step 550.

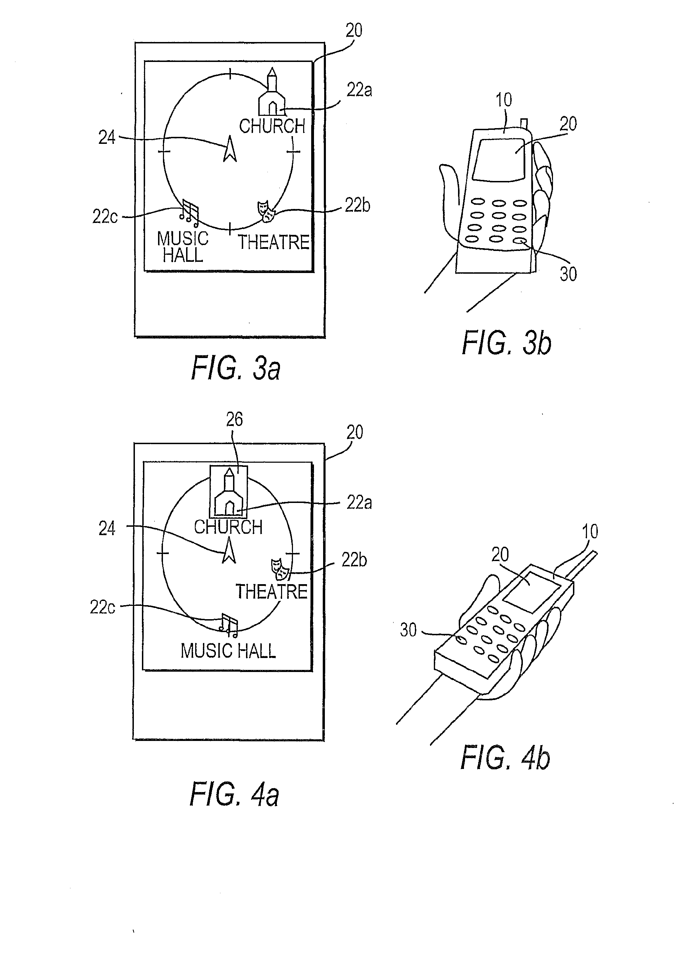

Fig. 3a shows the display 20 when the UE 10 is a mobile phone. In this display, the orientation of the UE 10 is shown by an arrow 24. Fig. 3b shows the position of the UE 10. Here, a church is to the right of the UE 10 and a music hall and a theatre are behind the UE 10. Fig. 4a shows the display 20 and Fig. 4b shows the relative position of the UE 10 after the UE has been rotated to the right so that the church icon 22a is now in a target space 26 in front of the UE 10. Accordingly, the church icon 22a is now highlighted and can be accessed by pushing a button on the input device 30 of the mobile phone associated with that function.

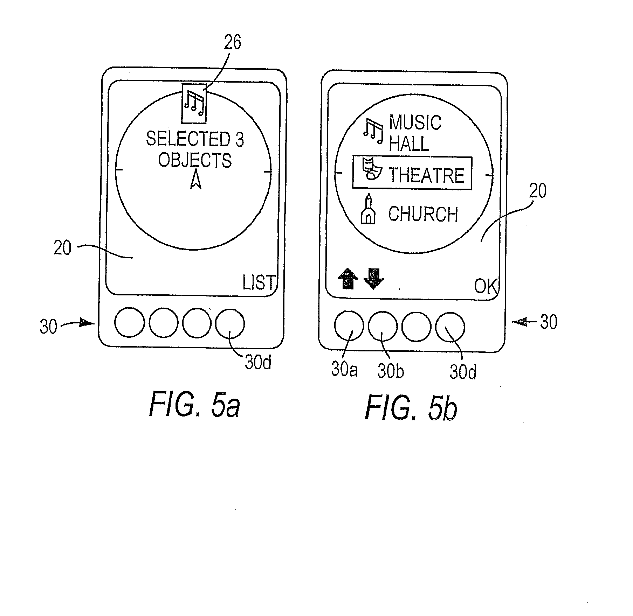

Since the amount of information that can be displayed on a mobile phone display is limited, only one object is shown in one direction. However, if more than one object lies in front of the user, the user may be informed of this visually and/or aurally and a list may be displayed so that the user can choose which object in the target space 26 is to be accessed. Fig. 5a shows the display 20 when more than one object is in front of the UE 10. A button 30d and the input device 30 associated with the list function may be actuated to show the list of selected objects. Fig. 5b shows the display 20 when the list of selected objects are shown. The input device 30 may have buttons 30a and 30b associated with up and down functions to select an item on the list. Furthermore, the button 30d or any other button on the input device 30 may function as an activation button for activating the selected virtual object when the list display is shown.

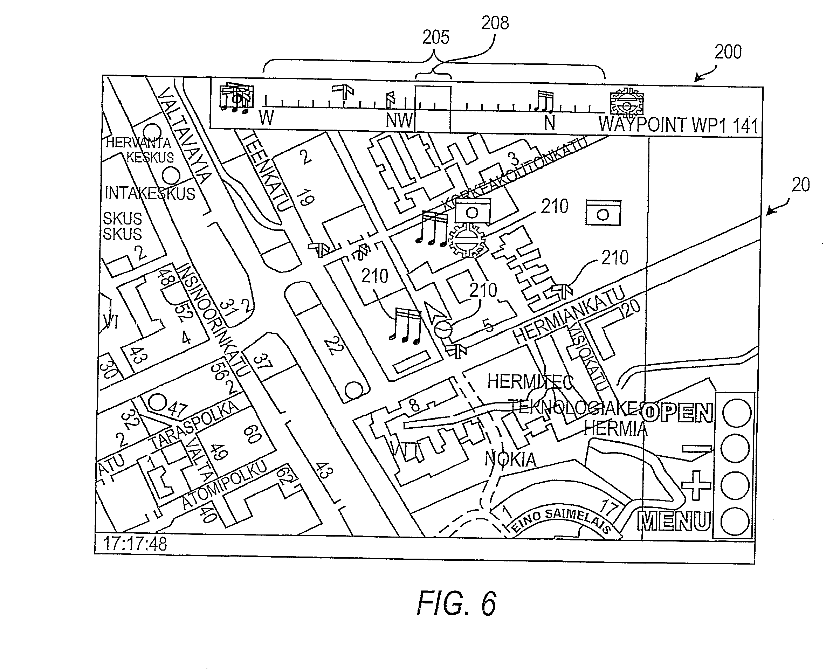

Referring to Fig. 6, when the UE 10 comprises a PDA, the display 20 shows more details. In this embodiment, the display 20 may show a map showing the virtual objects 210 surrounding the user. The top of the display 20 comprises a linear compass 200 which shows objects in a field-of-view 205 in front of the user. In Fig. 6, the field-of-view 205 of the linear compass 200 covers an angle of approximately 110 degrees. However, a larger or smaller field of view 205 could also be used depending on the particular application or the user's preference up to and including 360 degrees. In this embodiment, virtual objects 210 are shown as icons on the display at a location of the real objects they are associated with. The icons are also shown in the linear compass 200 based on the direction to them from the user equipment. Accordingly, if the field-of-view is less than 360 degrees, only those icons associated with real objects within the field of view will be displayed. As in the previous embodiment, the user selects an object by pointing the UE 10, i.e., aligning the UE 10 so that the object is in front of the UE 10. In this embodiment, an object is selected when it is aligned within a target area 208 on the linear compass 200. The target area 208 is aligned with the front of the UE 10.

Another method for selecting one of the virtual objects may comprise using buttons which correspond to directions such as up, down, left, and right, on the input device 30 to jump from one virtual object to the next adjacent one in the input direction on the map shown on the display 20. This method eliminates the requirement of the user to reorient the UE 10 each time the user wishes to select a different virtual object.

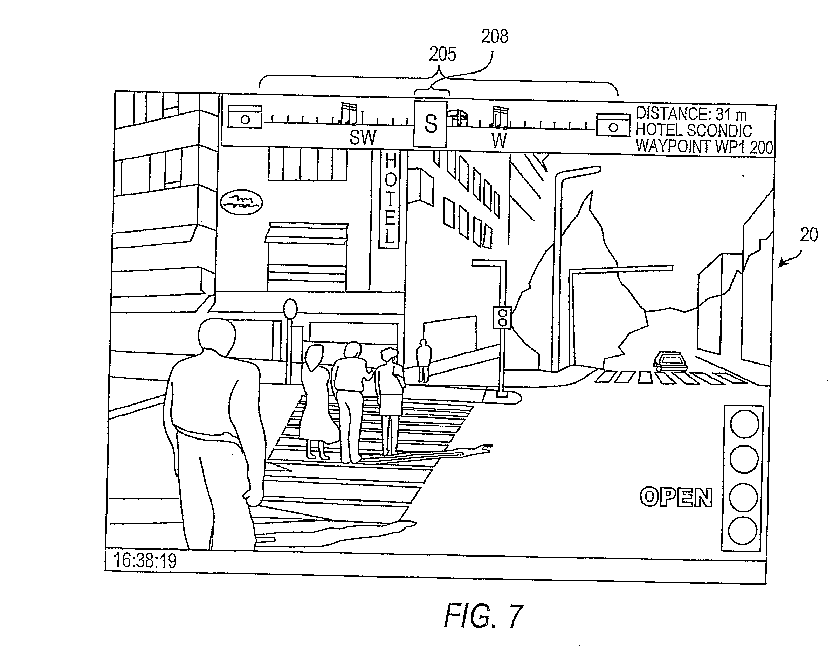

In another embodiment shown in Fig. 7, the display comprise a head mounted display which allows the user to see virtual data while simultaneously viewing the real world. These head-mounted displays are commercially available. In this embodiment, the user views the linear compass 200 while simultaneously viewing the real world. The linear compass 200 shows the user the virtual objects within the field-of-view 205 of the compass that are accessible. In this embodiment, the user wears the display which must have mounted thereto an actual compass. Accordingly, the user selects objects by rotating his head. In Fig. 7, the user has selected the Hotel Scandic. If the user wishes to access the virtual object, the input device (not shown in Fig. 7) is actuated. Fig. 7 further shows that the linear compass 200 may show an information area 215 in which information regarding the selected virtual object is displayed such as distance of the selected virtual object from the user location, name of the selected virtual object, and the compass point of the selected virtual object.

In each of the above examples, the network has been a long range network. However, a short range network such as Blue Tooth may also be used in indoor applications. For example, instead of displaying points of interest in a city, the short range system may display other electronic devices in a room with which the UE 10 can communicate such as a telephone, a printer, or a coffee maker.

Thus, while there have shown and described and pointed out fundamental novel features of the invention as applied to a preferred embodiment thereof, it will be understood that various omissions and substitutions and changes in the form and' details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A method, comprising:
determining a location of a hand held mobile device;
determining an orientation of the hand held mobile device;
downloading, at the hand held mobile device, contextual information comprising virtual objects (210), corresponding to real objects in an area surrounding the hand held mobile device, from a database (90) accessible through a network (80); and
selecting a virtual object in a visual user interface of the hand held mobile device, by aligning a target space of the visual user interface with that virtual object, wherein the alignment depends upon the determined orientation of the hand held mobile device.

2. A method as claimed in claim 1, wherein at least some of the virtual objects comprise an image for a corresponding real object.

3. A method as claimed in claim 2, wherein at least one image depicts a corresponding real object.

4. A method as claimed in any of the preceding claims, further comprising: enabling a user to select a size of an area near the hand held mobile device, wherein the downloaded contextual information comprises virtual objects corresponding to real objects in the area selected by the user.

5. A method as claimed in any of the preceding claims, further comprising: selecting a further virtual object by aligning the target space of the visual user interface of the hand held mobile device with that further virtual object, in response to re-orientation of the hand held mobile device by the user.

6. A method as claimed in any of the preceding claims, wherein the contextual information comprises at least one virtual object corresponding to a dynamic real object.

7. A method as claimed in claim 6, wherein the at least one dynamic real object is another hand held mobile device or public transportation.

8. A hand held mobile device, comprising:
means (101) for determining a location of the hand held mobile device;
means (50) for determining an orientation of the hand held mobile device;
means for downloading, at the hand held mobile device, contextual information comprising virtual objects (210), corresponding to real objects in an area surrounding the hand held mobile device, from a database (90) accessible through a network (80);
and
means for selecting a virtual object in a visual user interface of the hand held mobile device, by aligning a target space of the visual user interface with that virtual object, wherein the alignment depends upon the determined orientation of the hand held mobile device.

9. A hand held mobile device as claimed in claim 8, wherein at least some of the virtual objects comprise an image for a corresponding real object.

10. A hand held mobile device as claimed in claim 9, wherein at least one image depicts a corresponding real object.

11. A hand held mobile device as claimed in any of claims 8 to 10, further comprising: means for enabling a user to select a size of an area near the hand held mobile device, wherein the downloaded contextual information comprises virtual objects corresponding to real objects in the area selected by the user.

12. A hand held mobile device as claimed in any of claims 8 to 11, further comprising: means for selecting a further virtual object by aligning the target space of the visual user interface of the hand held mobile device with that further virtual object, after re-orientation of the hand held mobile device by the user.

13. A hand held mobile device as claimed in any of claims 8 to 12, wherein the contextual information comprises at least one virtual object corresponding to a dynamic real object.

## Patentansprüche

1. Verfahren, umfassend:
Bestimmen eines Orts einer handgehaltenen mobilen Einrichtung;
Bestimmen einer Orientierung der handgehaltenen mobilen Einrichtung;
Herunterladen, an der handgehaltenen mobilen Einrichtung, von Kontextinformationen, umfassend virtuelle Objekte (210), entsprechend realen Objekten in einem die handgehaltene mobile Einrichtung umgebenden Bereich, von einer Datenbank (90), auf die durch ein Netzwerk (80) zugegriffen werden kann; und
Wählen eines virtuellen Objekts in einer visuellen Benutzerschnittstelle der handgehaltenen mobilen Einrichtung durch Ausrichten eines Zielraums der visuellen Benutzerschnittstelle auf jenes virtuelle Objekt, wobei die Ausrichtung von der bestimmten Orientierung der handgehaltenen mobilen Einrichtung abhängt.

2. Verfahren nach Anspruch 1, wobei mindestens einige der virtuellen Objekte ein Bild für ein entsprechendes reales Objekt umfassen.

3. Verfahren nach Anspruch 2, wobei mindestens ein Bild ein entsprechendes reales Objekt darstellt.

4. Verfahren nach einem der vorhergehenden Ansprüche, weiterhin umfassend: Ermöglichen für einen Benutzer, eine Größe eines Bereichs nahe der handgehaltenen mobilen Einrichtung auszuwählen, wobei die heruntergeladenen Kontextinformationen virtuelle Objekte entsprechend realen Objekten in dem durch den Benutzer ausgewählten Bereich umfassen.

5. Verfahren nach einem der vorhergehenden Ansprüche, weiterhin umfassend: Auswählen eines weiteren virtuellen Objekts durch Ausrichten des Zielraums der visuellen Benutzerschnittstelle der handgehaltenen mobilen Einrichtung auf jenes weitere virtuelle Objekt als Reaktion auf eine Neuorientierung der handgehaltenen mobilen Einrichtung durch den Benutzer.

6. Verfahren nach einem der vorhergehenden Ansprüche, wobei die Kontextinformationen mindestens ein virtuelles Objekt entsprechend einem dynamischen realen Objekt umfassen.

7. Verfahren nach Anspruch 6, wobei das mindestens eine dynamische reale Objekt eine andere handgehaltene mobile Einrichtung oder öffentlicher Transport ist.

8. Handgehaltene mobile Einrichtung, umfassend:
Mittel (101) zum Bestimmen eines Orts der handgehaltenen mobilen Einrichtung;
Mittel (50) zum Bestimmen einer Orientierung der handgehaltenen mobilen Einrichtung;
Mittel zum Herunterladen, an der handgehaltenen mobilen Einrichtung, von Kontextinformationen, umfassend virtuelle Objekte (210), entsprechend realen Objekten in einem die handgehaltene mobile Einrichtung umgebenden Bereich, von einer Datenbank (90), auf die durch ein Netzwerk (80) zugegriffen werden kann; und
Mittel zum Wählen eines virtuellen Objekts in einer visuellen Benutzerschnittstelle der handgehaltenen mobilen Einrichtung durch Ausrichten eines Zielraums der visuellen Benutzerschnittstelle auf jenes virtuelle Objekt, wobei die Ausrichtung von der bestimmten Orientierung der handgehaltenen mobilen Einrichtung abhängt.

9. Handgehaltene mobile Einrichtung nach Anspruch 8, wobei mindestens einige der virtuellen Objekte ein Bild für ein entsprechendes reales Objekt umfassen.

10. Handgehaltene mobile Einrichtung nach Anspruch 9, wobei mindestens ein Bild ein entsprechendes reales Objekt darstellt.

11. Handgehaltene mobile Einrichtung nach einem der Ansprüche 8 bis 10, weiterhin umfassend: Mittel zum Ermöglichen für einen Benutzer, eine Größe eines Bereichs nahe der handgehaltenen mobilen Einrichtung auszuwählen, wobei die heruntergeladenen Kontextinformationen virtuelle Objekte entsprechend realen Objekten in dem durch den Benutzer ausgewählten Bereich umfassen.

12. Handgehaltene mobile Einrichtung nach einem der Ansprüche 8 bis 11, weiterhin umfassend: Mittel zum Auswählen eines weiteren virtuellen Objekts durch Ausrichten des Zielraums der visuellen Benutzerschnittstelle der handgehaltenen mobilen Einrichtung auf jenes weitere virtuelle Objekt nach einer Neuorientierung der handgehaltenen mobilen Einrichtung durch den Benutzer.

13. Handgehaltene mobile Einrichtung nach einem der Ansprüche 8 bis 12, wobei die Kontextinformationen mindestens ein virtuelles Objekt entsprechend einem dynamischen realen Objekt umfassen.

## Revendications

1. Procédé, comprenant les étapes suivantes :
déterminer un emplacement d'un dispositif mobile portable ;
déterminer une orientation du dispositif mobile portable ;
télécharger, au niveau du dispositif mobile portable, des informations contextuelles comprenant des objets virtuels (210) correspondant à des objets réels dans une zone entourant le dispositif mobile portable, à partir d'une base de données (90) accessible par un réseau (80) ; et
sélectionner un objet virtuel dans une interface utilisateur visuelle du dispositif mobile portable, en alignant un espace cible de l'interface utilisateur visuelle avec cet objet virtuel, l'alignement dépendant de l'orientation déterminée du dispositif mobile portable.

2. Procédé selon la revendication 1, dans lequel au moins certains des objets virtuels comprennent une image pour un objet réel correspondant.

3. Procédé selon la revendication 2, dans lequel au moins une image représente un objet réel correspondant.

4. Procédé selon l'une quelconque des revendications précédentes, comprenant en outre l'étape suivante : permettre à un utilisateur de sélectionner une taille d'une zone proche du dispositif mobile portable, les informations contextuelles téléchargées comprenant des objets virtuels correspondant à des objets réels dans la zone sélectionnée par l'utilisateur.

5. Procédé selon l'une quelconque des revendications précédentes, comprenant en outre l'étape suivante : sélectionner un objet virtuel supplémentaire en alignant l'espace cible de l'interface utilisateur visuelle du dispositif mobile portable avec cet objet virtuel supplémentaire, en réponse à une réorientation du dispositif mobile portable par l'utilisateur.

6. Procédé selon l'une quelconque des revendications précédentes, dans lequel les informations contextuelles comprennent au moins un objet virtuel correspondant à un objet réel dynamique.

7. Procédé selon la revendication 6, dans lequel l'au moins un objet réel dynamique est un autre dispositif mobile portable ou un transport public.

8. Dispositif mobile portable, comprenant :
un moyen (101) pour déterminer un emplacement du dispositif mobile portable ;
un moyen (50) pour déterminer une orientation du dispositif mobile portable ;
un moyen pour télécharger, au niveau du dispositif mobile portable, des informations contextuelles comprenant des objets virtuels (210) correspondant à des objets réels dans une zone entourant le dispositif mobile portable, à partir d'une base de données (90) accessible par un réseau (80) ; et
un moyen pour sélectionner un objet virtuel dans une interface utilisateur visuelle du dispositif mobile portable, en alignant un espace cible de l'interface utilisateur visuelle avec cet objet virtuel, l'alignement dépendant de l'orientation déterminée du dispositif mobile portable.

9. Dispositif mobile portable selon la revendication 8, dans lequel au moins certains des objets virtuels comprennent une image pour un objet réel correspondant.

10. Dispositif mobile portable selon la revendication 9, dans lequel au moins une image représente un objet réel correspondant.

11. Dispositif mobile portable selon l'une quelconque des revendications 8 à 10, comprenant en outre : un moyen pour permettre à un utilisateur de sélectionner une taille d'une zone proche du dispositif mobile portable, les informations contextuelles téléchargées comprenant des objets virtuels correspondant à des objets réels dans la zone sélectionnée par l'utilisateur.

12. Dispositif mobile portable selon l'une quelconque des revendications 8 à 11, comprenant en outre : un moyen pour sélectionner un objet virtuel supplémentaire en alignant l'espace cible de l'interface utilisateur visuelle du dispositif mobile portable avec cet objet virtuel supplémentaire, après une réorientation du dispositif mobile portable par l'utilisateur.

13. Dispositif mobile portable selon l'une quelconque des revendications 8 à 12, dans lequel les informations contextuelles comprennent au moins un objet virtuel correspondant à un objet réel dynamique.
